# EUROPÄISCHE PATENTANMELDUNG

(11) **EP 2 072 306 A1**
(43) Veröffentlichungstag der Anmeldung: **24.06.2009**
(21) Anmeldenummer: 08022062.7
(22) Anmeldetag: 18.12.2008
(51) Int. Cl.: B60J 7/12

(54) **Faltverdeck mit einem Verdeckbezug**

(30) Priorität: 18.12.2007 DE 102007061681
(71) Anmelder: Webasto AG, 82131 Stockdorf (DE)
(72) Erfinder: Haussmann, Jochen, 82346 Andechs (DE)
(74) Vertreter: Bosch, Matthias

(57) **Zusammenfassung**

Die Erfindung betrifft ein Faltverdeck mit einem am Fahrzeug angelenkten Verdeckgestell (2) und einem Verdeckbezug (3), der vom Verdeckgestell (2) getragen ist, mit diesem zwischen einer Schließstellung und einer Offenstellung verstellbar ist und bei geschlossenem Faltverdeck (1) an zumindest einem Gestellteil (10) des Verdeckgestells (2) fest gehalten ist, wobei erfindungsgemäß vorgesehen ist, dass ein längliches Zugelement (12) einerseits im Bereich des Gestellteils (10) an der Innenseite des Verdeckbezugs (3) befestigt und in einer Schlaufe (14) um das Gestellteil (10) geschlungen ist und andererseits mit einer Betätigungseinrichtung verbunden ist, wobei durch Anziehen des Zugelementes (12) die Schlaufe (14) straff um das Gestellteil (10) gezogen wird, so dass das Gestellteil (10) an dem Verdeckbezug (3) fixiert ist, und durch Nachlassen des Zugelementes (12) die Schlaufe (14) erweiterbar ist, so dass das Gestellteil (10) und der Verdeckbezug (3) relativ zueinander bewegbar sind.

## Beschreibung

Die Erfindung betrifft ein Faltverdeck mit einem am Fahrzeug angelenkten Verdeckgestell und einem Verdeckbezug, der vom Verdeckgestell getragen ist, mit diesem zwischen einer Schließstellung und einer Offenstellung verstellbar ist und bei geschlossenem Faltverdeck an zumindest einem Gestellteil des Verdeckgestells fest gehalten ist.

Die übliche Art der Befestigung eines Verdeckbezugs eines Faltverdecks oder Softtops an Gestellteilen wie Spriegeln oder Rahmenteilen erfolgt mittels Kederverbindungen, Steckverbindungen, Klemmverbindungen oder Clipsverbindungen. Damit wird der Verdeckbezug an den Gestellteilen fest angebracht.

Aus der DE 201 18 834 U1 ist ein Faltverdeck mit Spriegeln bekannt geworden, die jeweils einen inneren Längskanal aufweisen, in dem ein Kopfteil eines Kederprofils aufgenommen ist. Ein Befestigungsstreifen des Kederprofils ist an der Innenfläche des Verdeckbezugs fixiert. Der Verdeckbezug ist somit an den Spriegeln mittels des Kederprofils stets fest angebracht.

Wenn ein derartiges Faltverdeck geöffnet und abgelegt wird, bewegt sich der an den Gestellteilen fixierte Verdeckbezug entsprechend der Bewegung der Spriegel bzw. Gestellteile. Der fixierte Verdeckbezug schränkt jedoch die Möglichkeiten bei der Gestaltung der Kinematik des Verdeckgestells wie auch für eine möglichst kleinräumige Ablagestellung des Faltverdecks (d. h. geringes Package-Maß) ein. Insgesamt sind die Freiheitsgrade der Gestaltung wie auch der Bewegung dieses Faltverdecks somit eingeschränkt.

Wird der Verdeckbezug an einem oder an mehreren Spriegeln nicht befestigt, so dass er bei geschlossenem Faktverdeck ohne Fixierung über diese Spriegel lediglich gespannt verläuft, so kann das Ablegen des Faltverdecks zwar erleichtert sein, der Verdeckbezug kann sich im Fahrbetrieb aber ballonartig aufblähen.

Um dieses ballonartige Aufblähen des Verdeckbezugs zu vermeiden, ist bei dem in der DE 42 10 550 A1 offenbarten Faltverdeck vorgesehen, dass der Verdeckbezug, der über zumindest einige Spriegel lose geführt ist, durch zumindest ein Zugmittel in Gestalt eines Stahlseils bei geschlossenem Faltverdeck gegen diese Spriegel spannbar ist. Das Stahlseil verläuft in Längsrichtung des Faltverdecks bzw. in Fahrtrichtung und ist mit seinem Vorderende am vorderen Spriegel bzw. der Verdeckspitze und mit seinem hinteren Ende am hinteren Spriegel oder Spannbügel fest angebracht. Am Verdeckbezug ist innenseitig eine Zugmittelführungsschlaufe ausgebildet, durch die das Stahlseil geführt ist. Bei geschlossenem Faltverdeck spannt das Stahlseil den Verdeckbezug gegen die Spriegel, so dass der Verdeckbezug an jedem Spriegel in Punktkontakt gehalten ist.

Der Erfindung liegt die Aufgabe zugrunde, ein eingangs genanntes Faltverdeck zu schaffen, das hinsichtlich der Anbringung des Verdeckbezugs an dem Verdeckgestell verbessert ist.

Die Aufgabe wird bei einem Faltverdeck mit den Merkmalen des Oberbegriff des Anspruchs 1 dadurch gelöst, dass ein längliches Zugelement einerseits im Bereich des Gestellteils an der Innenseite des Verdeckbezugs befestigt ist, in einer Schlaufe um das Gestellteil geschlungen ist und andererseits mit einer Betätigungseinrichtung verbunden ist, wobei durch Anziehen des Zugelementes die Schlaufe straff um das Gestellteil gezogen wird, so dass das Gestellteil an dem Verdeckbezug fixiert ist, und durch Nachlassen des Zugelementes die Schlaufe erweiterbar ist, so dass das Gestellteil und der Verdeckbezug relativ zueinander bewegbar sind.

Vorteilhafte Ausgestaltungen der Erfindung sind in den Unteransprüchen angegeben.

Das erfindungsgemäße Faltverdeck ist demnach derart gebildet, dass wahlweise der Verdeckbezug an dem Gestellteil fest angebracht ist oder dass die Möglichkeit einer Relativbewegung zwischen dem Gestellteil und dem Verdeckbezug vorgesehen ist. Bei der festen Anbringung des Verdeckbezugs an dem Gestellteil kann der Verdeckbezug insbesondere bei geschlossenem Faltverdeck straff und eng an dem Verdeckgestell gespannt gehalten werden, so dass auch bei höheren Fahrgeschwindigkeiten ein Aufblähen (Balooning) des Verdeckbezugs aufgrund eines nach oben wirkenden Unterdruckes vermieden wird. Andererseits kann die feste, insbesondere unmittelbare Verbindung zwischen dem Verdeckbezug und dem Gestellteil aufgehoben werden, wenn eine feste und enge Verbindung zwischen dem Gestellteil und dem Verdeckbezug hinderlich ist. Dies ist z. B. beim Öffnen des Faltverdecks und Einfalten oder Einklappen des Faltverdecks in den Ablageraum der Fall. Hierbei muß sich der Verdeckbezug bei bekannter dauerhaft fester Anbindung an das Gestellteil dessen Bewegung anpassen, wobei der Verdeckbezug häufig in gewissen Bereichen hohen Dehnungen ausgesetzt ist.

Das Zugelement bildet somit selbst die Schlaufe (im Gegensatz zu der DE 42 10 550 A1) und die Richtung, in der das Zugelement vom Gestellteil weg verläuft, ist im wesentlichen unerheblich, da das Anziehen des Zugelements die Schlaufe selbst verengt, unabhängig von der Richtung der Einleitung der Zugkraft.

Zweckmäßigerweise hält somit bei geschlossenem Faltverdeck die Betätigungseinrichtung die Schlaufe um das Gestellteil straff gespannt und zum Öffnen des Faltverdecks entspannt die Betätigungseinrichtung die Schlaufe, so dass das Gestellteil und die erweiterbare oder erweiterte Schlaufe bzw. der Verdeckbezug eine gegenseitige Relativbewegung ausführen können.

Bevorzugt kann die Schlaufe beim Bewegen des Faltverdecks in die Schließstellung straff gespannt werden oder sie wird erst beim oder nach dem Erreichen der Schließstellung gespannt.

Das Zugelement kann insbesondere ein Zugseil, ein bandförmiges Element oder ein Band sein. Zweckmäßigerweise ist es biegeweich oder flexibel, jedoch in Längsrichtung zugfest. Damit kann sich das Zugelement beim Falten des Faltverdecks in geeigneter Weise an die Faltung anpassen.

Bevorzugt weist das Gestellteil zumindest im Bereich der Schlaufe einen im wesentlichen runden oder ovalen Umfang auf. An einem derartigen kontinuierlichen Umfang ohne Kanten kann sich die Schlaufe dauerhaft und ohne Beschädigung zuziehen und wieder öffnen. Jedoch sind grundsätzlich auch eckige, rechteckige oder flache Querschnittsprofile des Gestellteils geeignet.

In einer bevorzugten Gestaltung weist das bandförmige oder flächige Zugelement an der dem Verdeckbezug zugewandten Seite des Gestellteils eine insbesondere mittige Ausnehmung auf, durch die das um das Gestellteil geschlungene und dabei in seiner Breite an die Ausnehmung angepasste Zugelement hindurchgeführt ist. Damit bleibt die Hauptzugrichtung in der Mitte des Zugelements. Jedoch ist auch eine spiralförmige Wicklung der Schlaufe möglich, insbesondere bei einem seil- oder drahtförmigen Zugelement.

Das Zugelement muss Ober seine Länge nicht konstant oder einheitlich gebildet sein. Vielmehr kann das Zugelement beispielsweise einen Befestigungsabschnitt aufweisen oder mit diesem verbunden sein, wobei das Zugelement an dem Verdeckbezug mittels des Befestigungsabschnitts befestigt sein kann und der Befestigungsabschnitt die Ausnehmung aufweisen kann. Des weiteren kann das Zugelement auch aus starren und aus flexiblen Elementen gebildet sein.

Die Betätigungseinrichtung kann von einem Spannbügel des Verdeckgestells gebildet sein, an dem das Zugelement befestigt ist und der relativ zum Gestellteil verstellbar ist und dabei das Zugelement spannt oder entspannt und nachlässt.

Grundsätzlich eignet sich jedes Teil des Faltverdecks als Betätigungseinrichtung, das bei einer Verdeckbewegung eine relative Bewegung zu dem Gestellteil ausführt.

In einer alternativen Gestaltung weist die Betätigungseinrichtung einen eigenen Antrieb auf. Die Betätigungseinrichtung kann mit diesem Antrieb unabhängig von der Stellung des Gestellteils und anderer Gestängeteile die Schlaufe verengen und erweitern.

Zweckmäßigerweise ist das Gestellteil ein Spriegel des Faltverdecks, der z. B. unmittelbar vor der Heckscheibe oder auch an beliebiger Stelle zwischen dem heckseitigen Spannbügel und der Verdeckspitze angeordnet sein kann. Andererseits können auch andere Teile des Gestells wie auch Längslenker oder seitliche Dichtungsträger eine erfindungsgemäße Gestaltung mit einer Schlaufe aufweisen.

Des weiteren kann das Zugelement zwischen der Betätigungseinrichtung und der Schlaufe direkt oder über zumindest eine Umlenkung geführt sein. Damit besteht eine größere gestalterische Freiheit bei der Anordnung des Zugelements.

Grundsätzlich kann nur ein Zugelement für ein Gestellteil oder Spriegel vorgesehen sein. Andererseits läst sich eine Mehrzahl von Zugelementen mit entsprechenden Anbringungen der Schlaufen an dem Verdeckbezug in dem Faltverdeck unterbringen, so dass ein fester Halt des Verdeckbezugs an mehreren Stellen des Faltverdecks möglich ist.

Nachfolgend wird ein erfindungsgemäßes Faltverdeck anhand eines Ausführungsbeispiels unter Bezugnahme auf die Zeichnung näher erläutert. Es zeigt:
- Fig. 1: in einer Draufsicht in schematischer Darstellung eine linke Hälfte eines hinteren Abschnitts eines Faltverdecks eines Cabriolet- Fahrzeugs in geschlossener Stellung;
- Fig. 2: in einer Seitenansicht in schematischer Darstellung das Faltverdeck in der Stellung gemäß Fig. 1;
- Fig. 3: in einer Seitenansicht gemäß Fig. 2 das Faltverdeck mit einem an- gehobenen Spannbügel;
- Fig. 4: in einer perspektivischen Schnittansicht einen Spriegel mit einem daran angeordneten Verdeckbezug und mit einer stramm anliegen- den Gurtschlaufe eines Gurtbandes; und
- Fig. 5: in einer perspektivischen Schnittansicht gemäß Fig. 4 den Spriegel mit der lose angeordneten Gurtschlaufe des entspannten Gurtban- des.

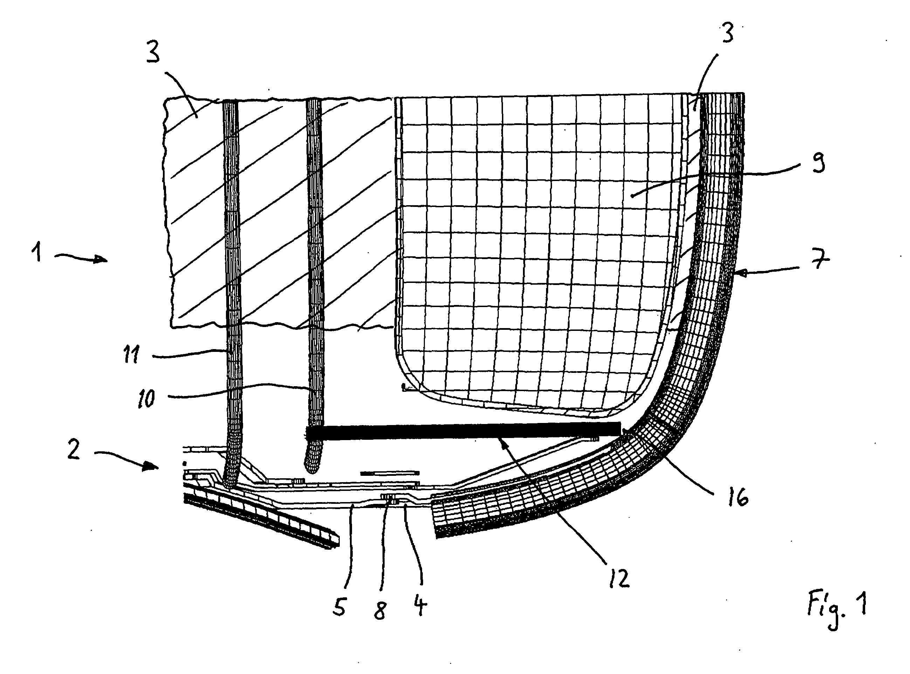

Ein Klapp- oder Faltverdeck 1 eines Cabriolet-Fahrzeugs (die Fig. 1 bis 3 zeigen schematisch einen hinteren Abschnitt des Faltverdecks 1) enthält ein Verdeckgestänge oder Verdeckgestell 2, das außenseitig eine Verdeckplane oder einen Verdeckbezug 3 trägt und in an sich bekannter Weise über beidseitig am Fahrzeug insbesondere als Viergelenk angeordnete Lenker 4 und 5 an einem Hauptlager 6 an der Karosserie des Fahrzeugs angelenkt ist und zwischen einer Schließstellung und einer Offen- oder Ablagestellung verstellbar ist. Der Verdeckbezug 3 ist an seinem Hinterrand an einem bogenförmigen Spannbügel 7 befestigt, der jeweils mittels eines seitlichen Schwenklagers 8 schwenkbar an dem Verdeckgestänge bzw. an einem der beiden Lenker 4, 5 angebracht ist. In einer Aussparung des Verdeckbezugs 3 ist eine Heckscheibe 9 angeordnet, die an ihrem Unterrand an dem Spannbügel 7 schwenkbar angelenkt ist und über eine Steuerhebeleinrichtung in ihre Gebrauchsstellung bei geschlossenem Faltverdeck 1 und ihre Ablagestellung bei geöffnetem, abgelegtem Faltverdeck 1 verstellbar ist.

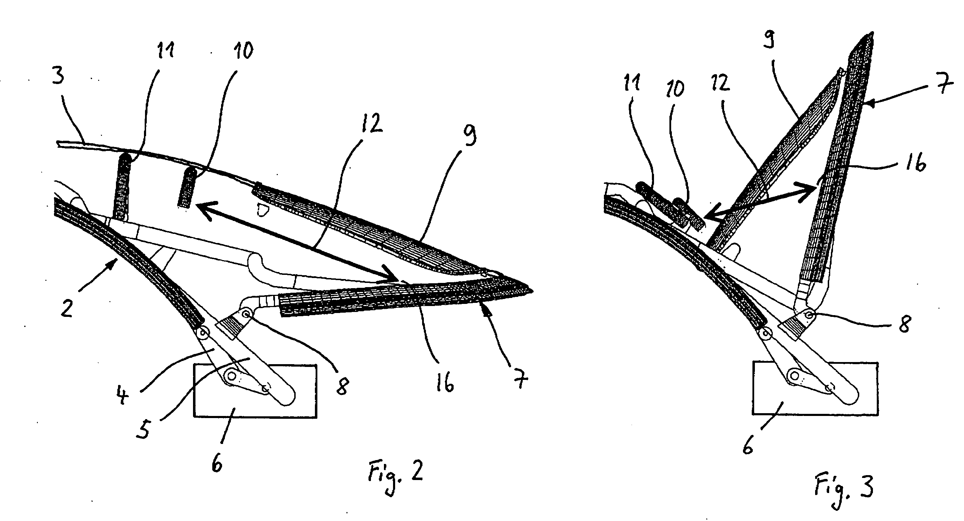

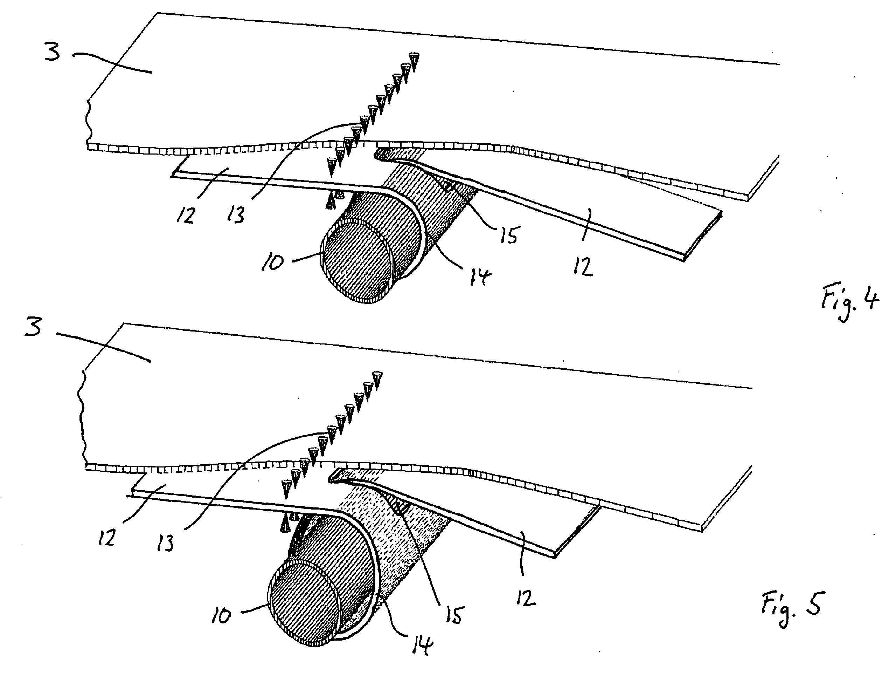

Das Verdeckgestell 2 enthält mehrere Spriegel, von denen in den Fig. 1 bis 3 der letzte Spriegel 10 vor der Heckscheibe 9 und der vorietzte Spriegel 11 dargestellt sind. Im Bereich des letzten Spriegels 10 ist an der Unterseite des Verdeckbezugs 3 (siehe Fig. 4 und 5) ein Gurtband 12 angeordnet (das Gurtband 12 ist in den Fig. 2 und 3 als Pfeil dargestellt), das mit dem Verdeckbezug 3 an einer Befestigungsstelle 13, die z. B. linienförmig parallel zum Spriegel 10 verläuft und kurz vor dem Spriegel 10 angeordnet ist, z. B. durch Kleben oder Nähen fest verbunden ist. In den Fig. 4 und 5 bildet eine schematisch dargestellte Naht die Befestigungsstelle 13. Das Gurtband 12 ist von der Befestigungsstelle 13 ausgehend in rückwärtiger Richtung in einer Schlaufe 14 um den Spriegel 10 gelegt, wobei das Gurtband 12 an der Oberseite des Spriegels 10 eine in etwa rechteckförmige Ausnehmung 15 aufweist, durch die das um den Spriegel 10 gelegte und auf dieser Strecke in seiner Breite sich verjüngende Gurtband 12 hindurchgeführt ist. Das Gurtband 12 erstreckt sich dann in rückwärtiger Richtung weiter nach hinten bis an den Spannbügel 7, an dem es an einer hinteren Befestigungsstelle 16 fest angebracht ist.

Bei geschlossenem Faltverdeck 1 (Fig. 1, 2 und 4) ist das Gurtband 12 von dem Spannbügel 7 in einer nach hinten gespannten Stellung gehalten, in der seine Schlaufe 14 fest und stramm um den Spriegel 10 gezogen ist. Dadurch liegt auch die Befestigungsstelle 13 des Gurtbandes 12 und folglich auch der Verdeckbezug 3 an dem Spriegel 10 eng und fest gehalten an.

Wenn der Spannbügel 7 z. B. beim Öffnen des Faltverdecks 1 nach oben geschwenkt wird (Fig. 3), verringert sich der Abstand zwischen der hinteren Befestigungsstelle 16 des Gurtbandes 12 am Spannbügel 7 und der Schlaufe 14 an dem Spriegel 10 und der Verdeckbezug 3 entspannt sich auch. Aufgrund des entspannten Gurtbandes 12 kann sich die Schlaufe 14 um den Spriegel 10 lockern und erweitern, so dass sich der Verdeckbezug 3 in dem Maße der erweiterten Schlaufe 14 des Gurtbandes 12 von dem Spriegel 10 abheben und entfernen kann (Fig. 5).

Beim vollständigen Ablegen des Faltverdecks 1 aus der Stellung der Fig. 3 in die Ablagestellung in dem Ablageraum oder Verdeckkasten kann das Gurtband 12 noch weiter entspannt werden. Weiterhin kann der Bewegungsweg des entspannten Gurtbandes 12 durch eine Begrenzungseinrichtung (nicht dargestellt) für eine maximale Größe der Schlaufe 14 festgelegt sein.

Die beiden Spriegel 10 und 11 können am Verdeckgestell 2 fest angebracht oder schwenkbar gelagert sein (wie in Fig. 3 dargestellt, in der sie nach vorne geschwenkt sind), so dass sie beim Öffnen des Faltverdecks 1 in eine den Verdeckbezug 3 entspannende Stellung gegen das Verdeckgestell 2 schwenkbar sind.

Ein solches Gurtband 10 kann beidseits der Heckscheibe 9 angeordnet sein. Des weiteren kann ein zweites Gurtband für eine Verbindung des vorletzten Spriegels 11 mit dem Spannbügel 7 oder einem anderen bewegbaren Gestellteil vorgesehen sein.

Als Zugelement kann statt des Gurtbandes 10 auch ein Zugseil oder dergleichen verwendet werden. Die Befestigung des Zugelements an dem Verdeckbezug 3 kann mittels eines Zwischenteils erfolgen, das eine punktuelle oder linienförmige Krafteinleitung des Zugelements auf eine längere Befestigungslinie oder eine größere Befestigungsfläche an dem Verdeckbezug 3 verteilt.

Grundsätzlich kann eine solche Schlaufe an jedem querverlaufenden wie auch längsverlaufenden Gestellteil, an dem der Verdeckbezug gehalten ist, vorgesehen sein und das Zugelement oder das Gurtband kann an jedem relativ zu dem Gestellteil bewegbaren und seinen Abstand dazu verändernden Bauteil des Faltverdecks befestigt sein, wobei das Zugelement oder das Gurtband zwischen dem jeweiligen Gestellteil und dem zugehörigen bewegbaren Bauteil mit oder ohne Umlenkung verlaufen kann.

### Bezugszeichenliste

- 1: Faltverdeck
- 2: Verdeckgestell
- 3: Verdeckbezug
- 4: Lenker
- 5: Lenker
- 6: Hauptlager
- 7: Spannbügel
- 8: Schwenklager
- 9: Heckscheibe
- 10: Spriegel
- 11: Spriegel
- 12: Gurtband
- 13: Befestigungsstelle
- 14: Schlaufe
- 15: Ausnehmung
- 16: hintere Befestigungsstelle

## Patentansprüche

1. Faltverdeck mit einem am Fahrzeug angelenkten Verdeckgestell und einem Verdeckbezug, der vom Verdeckgestell getragen ist, mit diesem zwischen einer Schließstellung und einer Offenstellung verstellbar ist und bei geschlossenem Faltverdeck an zumindest einem Gestellteil des Verdeckgestells fest gehalten ist,
**dadurch gekennzeichnet,**
**dass** ein längliches Zugelement (12) einerseits im Bereich des Gestellteils (10) an der Innenseite des Verdeckbezugs (3) befestigt und in einer Schlaufe (14) um das Gestellteil (10) geschlungen ist und andererseits mit einer Betätigungseinrichtung verbunden ist,
wobei durch Anziehen des Zugelementes (12) die Schlaufe (14) straff um das Gestellteil (10) gezogen wird, so dass das Gestellteil (10) an dem Verdeckbezug (3) fixiert ist, und durch Nachlassen des Zugelementes (12) die Schlaufe (14) erweiterbar ist, so dass das Gestellteil (10) und der Verdeckbezug (3) relativ zueinander bewegbar sind.

2. Faltverdeck nach Anspruch 1,
**dadurch gekennzeichnet, dass** bei geschlossenem Faltverdeck (1) die Betätigungseinrichtung die Schlaufe (14) um das Gestellteil (10) straff gespannt hält und zum Öffnen des Faltverdeck (1) die Betätigungseinrichtung die Schlaufe (14) entspannt und für eine Relativbewegung des Gestellteils (10) zur Schlaufe (14) bzw. zum Verdeckbezug (3) erweitert.

3. Faltverdeck nach Anspruch 1 oder 2,
**dadurch gekennzeichnet, dass** die Schlaufe (14) beim Bewegen des Faltverdecks (1) in die Schließstellung straff gespannt wird.

4. Faltverdeck nach einem der Ansprüche 1 bis 3,
**dadurch gekennzeichnet, dass** das Zugelement (12) ein Zugseil, ein bandförmiges Element oder ein Band ist.

5. Faltverdeck nach einem der Ansprüche 1 bis 4,
**dadurch gekennzeichnet, dass** das Gestellteil (10) zumindest im Bereich der Schlaufe (14) einen im wesentlichen runden oder ovalen Umfang aufweist.

6. Faltverdeck nach einem der Ansprüche 1 bis 5,
**dadurch gekennzeichnet, dass** das Zugelement (12) an der dem Verdeckbezug (3) zugewandten Seite des Gesteliteils (10) eine Ausnehmung (15) aufweist, durch die das um das Gestellteil (10) geschlungene und dabei in seiner Breite an die Ausnehmung (15) angepaßte Zugelement (12) hindurchgeführt ist.

7. Faltverdeck nach Anspruch 6,
**dadurch gekennzeichnet, dass** das Zugelement (12) einen Befestigungsabschnitt aufweist oder mit diesem verbunden ist, mittels dem das Zugelement (12) an dem Verdeckbezug (3) befestigt ist und der die Ausnehmung (15) aufweist.

8. Faltverdeck nach einem der Ansprüche 1 bis 7,
**dadurch gekennzeichnet, dass** die Betätigungseinrichtung von einem Spannbügel (7) des Verdeckgestells (2) gebildet ist, an dem das Zugelement (12) bzw. das Band befestigt ist und der relativ zum Gestellteil (10) verstellbar ist und dabei das Zugelement (12) bzw. Band spannt oder entspannt und nachläßt.

9. Faltverdeck nach einem der Ansprüche 1 bis 8,
**dadurch gekennzeichnet, dass** die Betätigungseinrichtung einen eigenen Antrieb aufweist.

10. Faltverdeck nach einem der Ansprüche 1 bis 9,
**dadurch gekennzeichnet, dass** das Zugelement (12) zwischen der Betätigungseinrichtung und der Schlaufe (14) direkt oder über zumindest eine Umlenkung geführt ist.

11. Faltverdeck nach einem der Ansprüche 1 bis 10,
**dadurch gekennzeichnet, dass** das Gestellteil ein Spriegel (10) ist.
